# EUROPEAN PATENT SPECIFICATION

(11) **EP 3 216 669 B1**
(45) Date of publication and mention of the grant of the patent: **13.03.2019**
(21) Application number: 14904975.1
(22) Date of filing: 28.10.2014
(51) Int. Cl.: B61D 15/06, B61G 11/16, F16F 7/12

(54) **RAIL VEHICLE EQUIPPED WITH IMPACT-ABSORBING DEVICE**
SCHIENENFAHRZEUG MIT STOSSABSORBIERENDER VORRICHTUNG
VÉHICULE FERROVIAIRE ÉQUIPÉ D'UN DISPOSITIF D'ABSORPTION D'IMPACT

(43) Date of publication of application: 13.09.2017
(73) Proprietor: Hitachi, Ltd., Tokyo 100-8280 (JP)
(72) Inventor: NAKAMURA, Hideyuki, Chiyoda-ku Tokyo 100-8280 (JP); MOCHIDA, Toshihiko, Chiyoda-ku Tokyo 100-8280 (JP); YAMAGUCHI, Takashi, Chiyoda-ku Tokyo 100-8280 (JP); KIMURA, Sota, Chiyoda-ku Tokyo 100-8280 (JP)
(74) Representative: Mewburn Ellis LLP
(86) International application number: PCT/JP2014/078598
(87) International publication number: WO 2016/067361

(56) References cited:
- EP-A1- 2 236 380
- EP-B1- 1 900 593
- WO-A1-2013/056950
- JP-A- 2007 210 441
- JP-A- 2007 302 081
- JP-A- 2008 018 849
- JP-A- 2008 239 083
- JP-A- 2012 107 660
- US-B2- 8 100 237

## Description

### Technical Field

The present invention relates to a railway vehicle equipped with a shock absorbing device that is disposed for relieving impact shock during a collision with an obstacle or the like and is applied particularly to railway vehicles such as a railroad vehicle and a monorail vehicle.

### Background Art

There is a possibility that a railway vehicle represented by a railroad vehicle comes into collision with an unexpected object while traveling. In the case of the railroad vehicle, unexpected objects of various kinds in past collision cases range from large objects such as a road vehicle, a tree, and a railroad vehicle to small objects such as a stone, a lump of snow, and a component of an oncoming vehicle.

Consideration is given here to a case where the railroad vehicle comes into collision with a large object. The collision with the large object causes great impact shock to act on the railroad vehicle. For the purpose of protecting crew and passengers in the railroad vehicle from this impact shock, there is such a concept that impact energy is absorbed through proactive deformation of a structural part of the railroad vehicle.

In other words, the concept is such that the railroad vehicle structurally has a space for the crew and the passengers that is intended to be protected from crushing in the collision of the railroad vehicle with the object (this space is hereinafter referred to as "survival zone") and a space that absorbs the impact energy through its proactive deformation in the collision of the railroad vehicle with the object (this space is hereinafter referred to as "crushable zone"), and these spaces are provided separately.

In a case where a small object, such as a stone or a lump of snow that is raised by wind caused by a vehicle traveling along an opposite track or a component of the oncoming vehicle, collides against a front face of a front section of the railroad vehicle, great impact shock does not act on the railroad vehicle because the railroad vehicle has overwhelmingly greater mass than the flying object. However, a possibility of damage particularly to a motorman among the crew and the passengers on board is conceivable as a result of the flying object penetrating a vehicle body. Accordingly, in the case of the collision with the small flying object, a strong structure is disposed on a vehicle end side of a space for the motorman for preventing the penetration of the flying object instead of absorbing the energy as described above. A protective plate disposed to prevent the flying object from penetrating the motorman's cab for the purpose of protecting the life of the motorman on board is called an anti-flying-object protective plate.

The vehicle body of the railroad vehicle is formed of an underframe, two side structures, a roof structure, and two end structures (a lead structure and an end structure in the case of a vehicle that is in a front or rear position of a train, and such a vehicle is hereinafter referred to as "lead vehicle" in either position). The underframe is mounted with strong center sills and strong side sills for supporting the structures, thereby having strong rigidity. A lower part of the underframe is provided with wiring and piping. Particularly in the case of a collision of a train of a plurality of railroad or railway vehicles, collisions among the vehicles' bodies too need to be taken into consideration. When the collision of the lead vehicle causes the collisions among the vehicle bodies of the train, it is the underframes that collide with one another. However, each of the underframes is not crushed in the collision because of having the strong rigidity, so that the impact shock cannot be relieved.

Accordingly, railroad vehicles equipped with shock absorbing devices that are configured to relieve impact shock caused to crew and passengers are proposed. In the proposal, not only the shock absorbing device of a lead vehicle, but also the respective shock absorbing devices of the other vehicles of the train absorb impact energy by being deformed.

PTL 1 proposes a railroad lead vehicle structurally provided with, at its front, a plurality of shock absorbing devices that absorbs impact energy through their deformation. Each of these shock absorbing devices is formed of, for example, a triangular element or a honeycomb panel and is disposed in a plane perpendicular to a direction in which impact load acts. The shock absorbing devices are arranged side by side relative to or along the direction in which the impact load acts.

In PTL 2, the applicant of the present invention proposes a railway vehicle equipped with a shock relieving mechanism that absorbs impact energy through deformation. This shock relieving mechanism is formed of a hollow structure including two face plates and a plurality of ribs connecting the face plates. The hollow structure has a tubular shape of quadrangular cross section and has a predetermined length dimension in an axial direction. Moreover, at least an underframe uses, for its members that form respective end parts positioned in a longitudinal direction of a vehicle body, a material softer than a material used for its central member in its longitudinal direction, thereby reducing or relieving impact shock that is caused to crew and passengers as much as possible for improved safety with the vehicle body hardly changing its shape even in a sudden collision.

Noting that a tubular absorber of quadrangular cross section has excessively increased rigidity at its corners as compared with its other parts and thus increases a crushing peak load as a cause of impact shock, the applicant of the present invention proposes in PTL 3 an absorber that is structurally not provided with a truss near each ridgeline defined between corners of its tubular shape.

PTL 4 proposes a tubular absorber of quadrangular cross section such as described above that is formed by, for example, joining four plates.

This tubular absorber has, in its internal space, a plurality of reinforcing plates that are spaced apart from each other in a longitudinal direction and joined. When the tubular absorber absorbs energy by being deformed, the reinforcing plates prevent buckling involving excessive deformation for improved shock absorbing characteristics.

In PTL 5, the applicant of the present invention provides such a proposal that a crushing peak load of a collision is lowered for improved shock absorbing characteristics by arranging a plurality of absorbers in parallel relationship with respective leading ends of the absorbers that are positioned in a direction in which impact load acts being out of alignment with each other.

PTL 6 proposes a railway vehicle equipped with a shock absorbing device.

PTL 7 proposes a metallic hollow shape member formed as a cylindrical structure.

### Citation List

### Patent Literature

PTL 1: JP 07-186951 A
PTL 2: JP 3725043 B2
PTL 3: JP 2005-075255 A
PTL 4: JP 2005-075256 A
PTL 5: JP 2007-326550 A
PTL 6: EP 2236380 A1
PTL 7: JP 2012 107660 A

### Summary of Invention

### Technical Problem

In a railway vehicle equipped with a shock absorbing device, the product of displacement (deformation) and crushing load (stress) that are caused by a collision of the shock absorbing device corresponds to absorbed energy (work). From a viewpoint of increase in transportation capacity, it is preferable that a survival zone be broadened as much as possible, so that a crushable zone that is as narrow as possible is required to effectively absorb impact energy.

To effect increase in the absorbed energy of the shock absorbing device, increase in the crushing load is preferable to increase in the displacement. However, the increase in the crushing load increases a crushing peak load in early crushing. The crushing peak load thus increased causes great impact shock to crew and passengers when acting particularly on the railway vehicle, and such a situation is unpreferable. Thus, lowering the crushing peak load while increasing the crushing load on the shock absorbing device is a problem to be solved.

An object of the present invention is to provide a railway vehicle equipped with a shock absorbing device that is capable of relieving impact shock and lowering a crushing peak load by preventing load to act on a whole surface of an absorber in a collision.

### Solution to Problem

For the purpose of solving the above problem, the present application includes a plurality of means to solve the problem. A railway vehicle according to the present invention is set out in claim 1. The absorber is a hollow structure including an inner plate of polygonal cross section, an outer plate of polygonal cross section, and a plurality of ribs connecting the inner plate and the outer plate along a direction in which impact load acts with the inner plate, the outer plate, and the ribs extending in the direction in which the impact load acts. A front member of polygonal cross section is mounted in front of the absorber to be substantially coaxial with the absorber. When viewed in the direction in which the impact load acts, an outer border of the front member and an end face of the inner plate of the absorber are disposed to cross each other or to come close to each other. When impact force is applied to the front member, prior to crushing of the absorber, the front member experiences, while maintaining its central axis along the direction in which the impact load acts, crushing that penetrates into an inner part of the inner plate from where the outer border of the front member and the end face of the inner plate cross each other for causing the impact force to act on the inner plate in a radial direction from its central axis.

### Advantageous Effects of Invention

With the above structure of the present invention, the crushing gradually starts from the part of the absorber in a collision, so that the load can be prevented from acting on a whole surface of the absorber. In this way, a crushing peak load can be lowered in early crushing of the absorber, and the impact shock can be relieved. In cases where the present invention is applied particularly to a railway vehicle such as a railroad vehicle, the impact shock caused to crew and passengers can be relieved. Problems, structures, and effects other than those described above become more obvious in descriptions of embodiments which are as follows.

### Brief Description of Drawings

FIG. 1 is a perspective view of a lead vehicle structure equipped with shock absorbing devices according to a first embodiment.
FIG. 2 is a side view of the shock absorbing device of the first embodiment that is applied to an end of the lead vehicle structure shown in FIG. 1.
FIG. 3 is a sectional view of an absorber of the shock absorbing device shown in FIG. 2, the section being taken along A-A of FIG. 2.
FIG. 4 is a sectional view of a front absorber of the shock absorbing device shown in FIG. 2, the section being taken along B-B of FIG. 2.
FIG. 5 is a front view of the shock absorbing device shown in FIG. 2 (that is viewed from C) with a connecting plate, a closing plate and an anti-climber removed therefrom.
FIG. 6 is a sectional view illustrating a portion of the shock absorbing device of FIG. 2 that is around the connecting plate, the section being taken along D-D of FIG. 2.
FIG. 7 is a graph showing an example of load varying according to displacement when the shock absorbing device of the first embodiment absorbs energy.
FIG. 8 is a side view of a shock absorbing device according to a second embodiment that is applied to the end of the lead vehicle structure shown in FIG. 1.
FIG. 9 is a sectional view of an absorber of the shock absorbing device shown in FIG. 8, the section being taken along E-E of FIG. 8.
FIG. 10 is a sectional view of a front plate of the shock absorbing device shown in FIG. 8, the section being taken along F-F of FIG. 8.
FIG. 11 is a front view of the shock absorbing device shown in FIG. 8 (that is viewed from G) with a connecting plate, a closing plate and an anti-climber removed therefrom.
FIG. 12 is a sectional view illustrating a portion of the shock absorbing device of FIG. 8 that is around the connecting plate, the section being taken along H-H of FIG. 8.
FIG. 13 is a graph showing an example of load varying according to displacement when the shock absorbing device of the second embodiment absorbs energy.

### Description of Embodiments

### [First Embodiment]

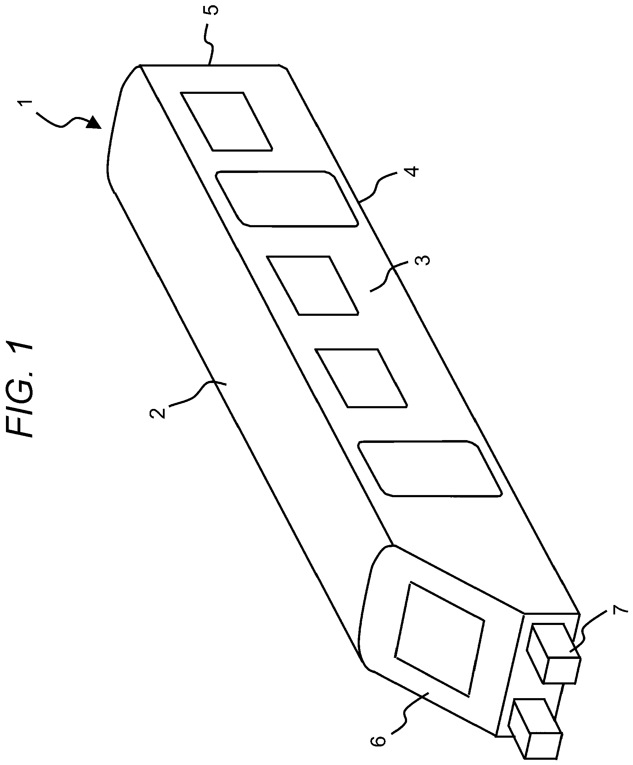

FIG. 1 is a perspective view of a lead vehicle structure equipped with shock absorbing devices according to the present embodiment. The lead vehicle structure 1 is formed of a roof structure 2 defining a top of the lead vehicle structure 1, side structures 3 defining respective sides of the lead vehicle structure 1, an underframe 4 defining a bottom of the lead vehicle structure 1, an end structure 5 defining a rear end of the lead vehicle structure 1, and a lead structure 6 defining a front end of the lead vehicle structure 1.

The lead vehicle structure 1 has, at its front, two shock absorbing devices 7 extending in a longitudinal direction of the lead vehicle structure 1. These shock absorbing devices 7 are provided on a lower part of the lead structure 6 so as not to interfere with, for example, a front window that is provided at an upper part of the lead vehicle structure 1 and a coupler that is provided at a central part of the lead vehicle structure 1 in a width direction of the lead vehicle structure 1. These two shock absorbing devices 7 are disposed at the same level and positioned to be symmetrical about the width direction of the lead vehicle structure 1. Each of their positions corresponds to a position of a shock absorbing device or a buffer of an existing vehicle, so that the shock absorbing devices 7 operate effectively even in a collision with the existing vehicle.

The shock absorbing device 7 of the present embodiment can be applied not only to an end of a lead railroad vehicle but also to an end of each intermediate vehicle of a train. The train consists of the lead vehicles in a front and a rear position and a required number of intermediate vehicles. When the lead vehicle comes into collision with, for example, an obstacle or another vehicle, not only a collision between the respective ends of the lead vehicle and the intermediate vehicle adjacent to the lead vehicle but also collisions among the respective ends of the adjacent intermediate vehicles follow in succession. With the shock absorbing devices applied to the respective ends of the lead vehicles and the intermediate vehicles, impact shock caused by the collision of the lead vehicle or the possible secondary collisions among the intermediate vehicles can be relieved, whereby passengers and crew can be protected.

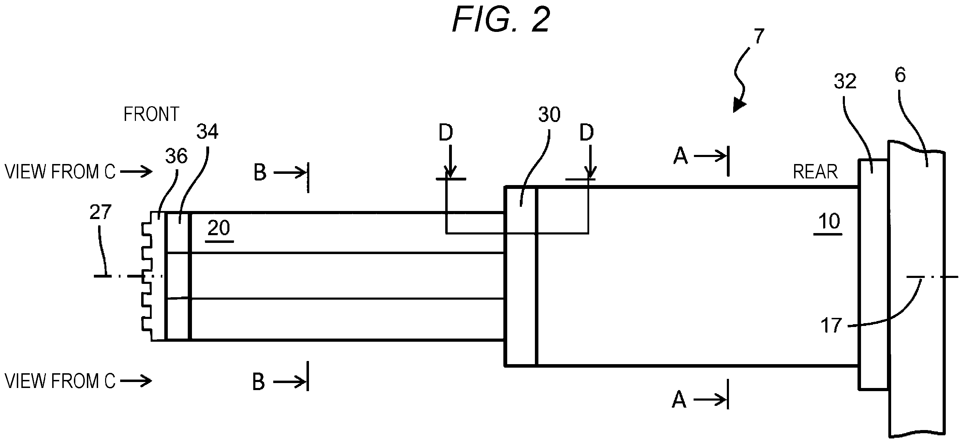

FIGS. 2 to 6 illustrate a structure of the shock absorbing device 7 of the present embodiment. The shock absorbing device 7 is formed mainly of an absorber 10 mounted to the lead vehicle structure 1, a front absorber 20 in a front position in a traveling direction or in the longitudinal direction of the lead vehicle structure 1, and a connecting plate 30 connecting the absorber 10 and the front absorber 20. In the present embodiment, the front absorber 20 and the connecting plate 30 form a front member.

The connecting plate 30 has an outer shape substantially corresponding to an outer shape of the absorber 10, and its outer border is joined firmly to an outer border of an outer plate 12 (described later) of the absorber 10. A closing plate 32 having a larger outer shape than the absorber 10 is joined to a rear end of the absorber 10 and is joined to the lead structure 6 behind by a bolt or a screw.

A closing plate 34 having an outer shape substantially corresponding to an outer shape of the front absorber 20 is joined to a front end of the front absorber 20, and an anti-climber 36 is joined to a front end of the closing plate 34 by a bolt or a screw. The anti-climber 36 mentioned here is a member that prevents the railroad vehicle from running on to another railroad vehicle in a collision through engagement of its uneven leading end with an uneven leading end of the other railroad vehicle. Because of being coupled to the lead structure 6 via the closing plate 32 by the bolt or the screw, the shock absorbing device 7 can be replaced with ease when deformed in the collision.

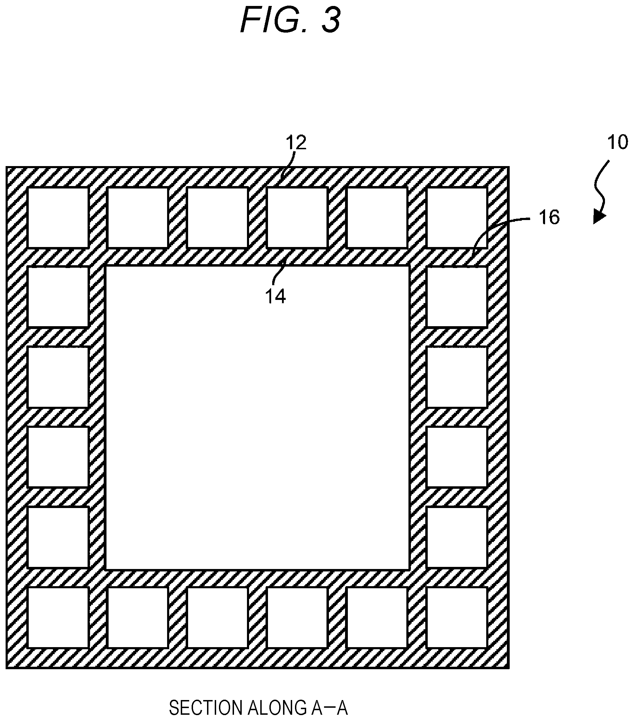

As shown in FIG. 3, which is a sectional view taken along A-A of FIG. 2, the absorber 10 is a hollow structure having the outer plate 12 and an inner plate 14 that are connected by ribs 16 and has a tubular shape of square cross section.

This absorber 10 is formed of an extrusion structure made of aluminum alloy, and its extruded direction coincides with a longitudinal direction of the shock absorbing device 7 (that is, a direction in which impact load acts). The outer plate 12 and the inner plate 14 are substantially parallel to each other, while the ribs 16 are disposed to be substantially perpendicular to the outer plate 12 and the inner plate 14 and extend in the traveling direction of the lead vehicle.

In the present embodiment, the cross section of the absorber 10 that crosses a longitudinal direction of the absorber 10 is square but may be, for example, rectangular, triangular or pentagonal. Moreover, although the absorber 10 is formed of the extrusion structure made of aluminum alloy, the absorber 10 may be formed by joining a plurality of extrusion structures made of aluminum alloy or combining and joining a plurality of plates made of aluminum alloy and a plurality of plates made of steel.

In the present embodiment, the extruded direction of the absorber 10 coincides with the longitudinal direction of the shock absorbing device 7, that is to say, the direction in which the impact load acts, but may coincide with a circumferential direction of the shock absorbing device 7. Moreover, although the outer plate 12 and the inner plate 14 are substantially parallel to each other with the ribs 16 being disposed to be substantially perpendicular to the outer plate 12 and the inner plate 14, the outer plate 12, the inner plate 14, and each of the ribs 16 may be slanted with respect to one another.

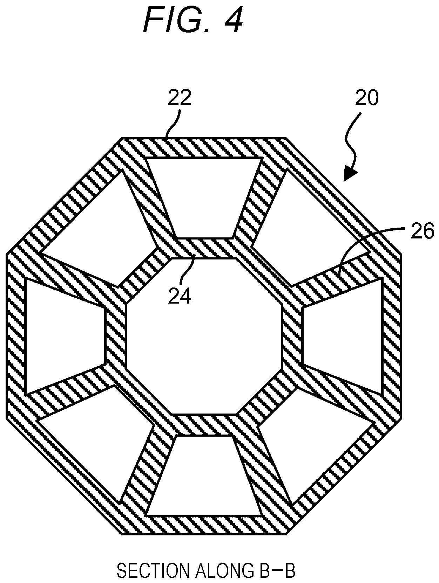

As shown in FIG. 4, which is a sectional view taken along B-B of FIG. 2, the front absorber 20 is a hollow structure having an outer plate 22 and an inner plate 24 that are connected by ribs 26 and has a tubular shape having a cross section in the form of a regular octagon.

As in the case of the absorber 10, the front absorber 20 is formed of an extrusion structure made of aluminum alloy, and its extruded direction coincides with the longitudinal direction of the shock absorbing device 7, that is to say, the direction in which the impact load acts. The outer plate 22 and the inner plate 24 are parallel to each other, while the ribs 26 are disposed in respective radial directions that extend from a center of its cross section so as to each connect a corresponding vertex of the inner plate 24 and a corresponding vertex of the outer plate 22.

In the present embodiment, the cross section of the front absorber 20 that crosses a longitudinal direction of the front absorber 20 has the form of the regular octagon but may be, for example, octagonal, hexagonal or decagonal. Moreover, although the front absorber 20 is formed of the extrusion structure made of aluminum alloy, the front absorber 20 may be formed by joining a plurality of extrusion structures made of aluminum alloy or combining and joining a plurality of plates made of aluminum alloy and a plurality of plates made of steel.

In the present embodiment, the extruded direction of the front absorber 20 coincides with the longitudinal direction of the shock absorbing device 7 but may coincide with the circumferential direction of the shock absorbing device 7. Moreover, although the outer plate 22 and the inner plate 24 are parallel to each other with the ribs 26 being disposed in the respective radial directions extending from the center so as to each connect the respective corresponding vertices of the outer plate 22 and the inner plate 24, the outer plate 22, the inner plate 24, and each of the ribs 26 may be slanted with respect to one another.

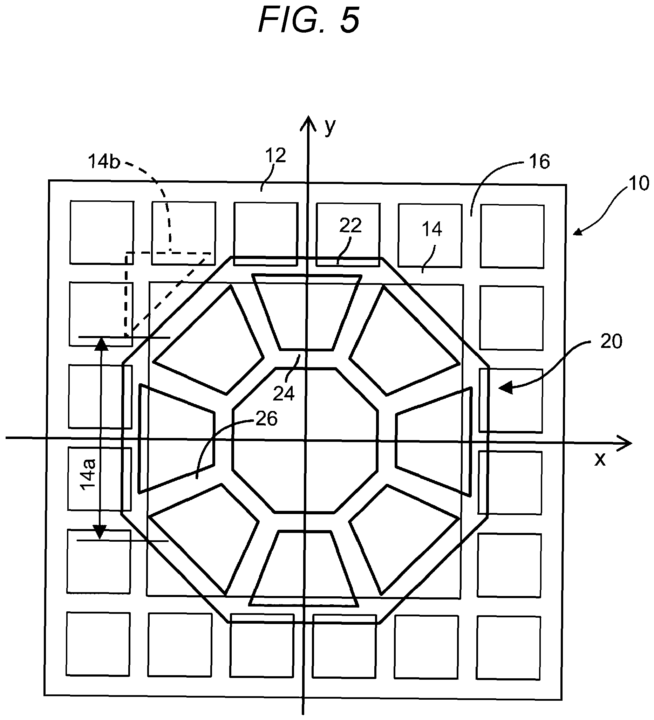

For the purpose of preventing overall buckling of the shock absorbing device 7, the absorber 10 and the front absorber 20 are disposed to be substantially coaxial with each other, and as shown in FIG. 5, among eight sides of the outer plate 22 of the front absorber 20, four sides including those facing each other in a vertical direction and those facing each other in a horizontal direction are disposed parallel to respective four sides of the inner plate 14 of the absorber 10 when viewed in the longitudinal direction (in the direction in which the impact load acts).

In other words, the absorber 10 and the front absorber 20 are in phase with each other in the circumferential direction of the shock absorbing device 7 (that is, around axes 17, 27) and are not rotated relative to each other. When viewed in the longitudinal direction (in the direction in which the impact load acts), the above four sides among the eight sides of the outer plate 22 of the front absorber 20 overlap respective central portions 14a of the four sides of the inner plate 14 of the absorber 10 (refer to FIG.5). This is a result of the number of angles of the absorber 10 being half the number of angles of the front absorber 20. A similar positional relationship is seen even, for example, in a combination of a hexagonal front absorber 20 and a triangular absorber 10 or a combination of a decagonal front absorber 20 and a pentagonal absorber 10.

When the impact shock acts on the shock absorbing device 7, the front absorber 20 crushes first because its cross section that crosses its longitudinal direction is smaller than the cross section of the absorber 10 that crosses the longitudinal direction of the absorber 10. The load under which the front absorber 20 has crushed acts on the central portions 14a (refer to FIG. 5) of the inner plate 14 of the absorber 10 disposed to axially overlap the front absorber 20. Each of the central portions 14a has less rigidity than a corner portion 14b (refer to FIG. 5) where two adjacent ribs 16 and the inner plate 14 of the absorber 10 are close to one another. With the load transmitted to the central portions 14a of less rigidity, crushing of the absorber 10 begins with collapse of the central portions 14a of the inner plate 14 without a great peak load that is a likely cause of impact shock caused to the passengers and the crew and progresses through the ribs 16 connecting with the inner plate 14 toward the outer plate 12 connecting with the ribs 16. Consequently, a large amount of impact shock can be absorbed.

It is to be noted that the above description of the process in which the load under which the front absorber 20 crushes is transmitted to the central portions 14a of the inner plate 14 of the absorber 10 is based on a case where the front absorber 20 is connected directly to the absorber 10.

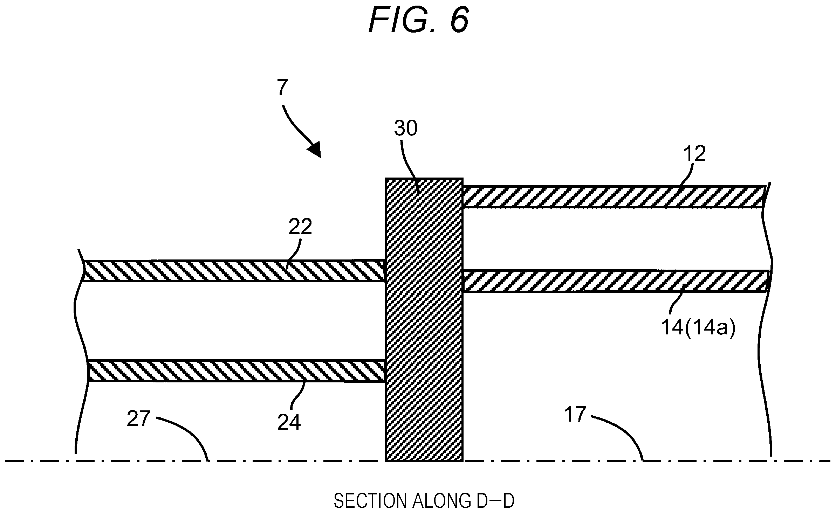

However, as shown in FIGS. 2 and 6, the front absorber 20 is preferably coupled to the absorber 10 via the connecting plate 30 having a predetermined thickness for transmission of the load under which the front absorber 20 crushes to the absorber 10 through the connecting plate 30.

The connecting plate 30 has the predetermined thickness to have such rigidity as to be capable of receiving the load under which the front absorber 20 crushes and transmitting the load to the absorber 10. Since the connecting plate 30 has such a predetermined thickness, even in cases where the front absorber 20 is not axially aligned with the absorber 10, the load under which the front absorber 20 crushes is transmitted to the inner plate 14 (particularly to the central portions 14a) of the absorber 10 through the connecting plate 30, so that the shock absorbing device 7 absorbs a large amount of impact shock by being crushed without causing an excessive peak load.

In addition, assembly tolerance necessary for the placement such as shown in FIG. 5 in which the axis 27 of the front absorber 20 is aligned with the axis 17 of the absorber 10 can be moderated, so that manufacturing cost necessary for assembly can be reduced accordingly.

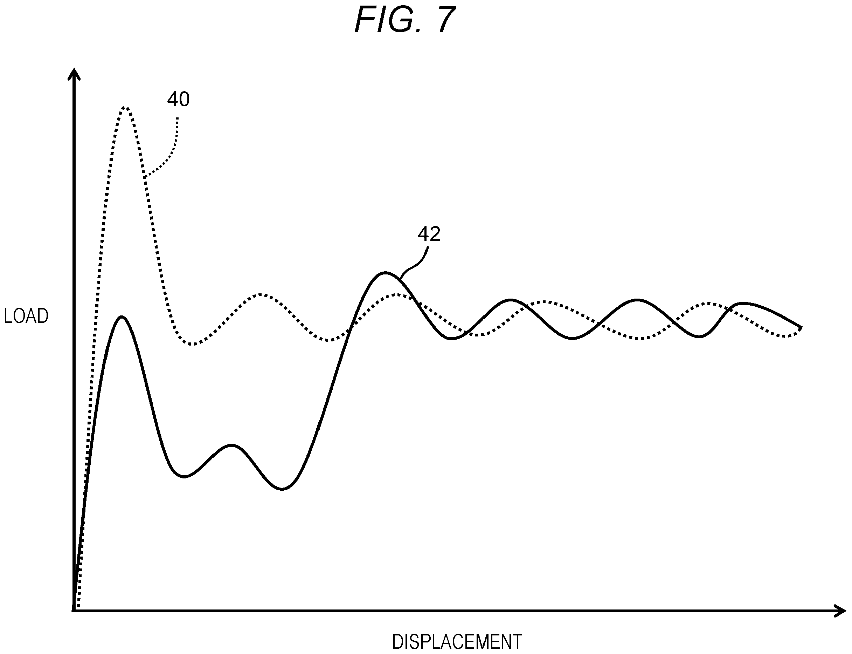

FIG. 7 is a graph showing a load-displacement curve of a structure using only the absorber 10 and a load-displacement curve of the present embodiment (the structure using the absorber 10 and the front absorber 20 in combination). In a shock absorbing device 7 using only the absorber 10, the load acts on a whole surface of the absorber 10 of large cross section in early crushing, so that a high crushing peak load is caused, thereby causing great impact shock to the crew and the passengers in the railroad vehicle.

On the other hand, in the shock absorbing device 7 of the present embodiment that includes the combination of the absorber 10 and the front absorber 20, the front absorber 20 of smaller cross section crushes first in early crushing, so that an excessive crushing peak load can be prevented. When the absorber 10 crushes subsequently to the crushing of the front absorber 20, the load from the front absorber 20 acts mainly on the inner plate 14 of the absorber 10, whereby the crushing gradually starts from the central portions 14a of less rigidity of the inner plate 14. Thus, the excessive peak load resulting from the load acting on the whole surface of the absorber 10 at a time can be prevented.

When the shock absorbing device 7 is viewed in its axial direction, the outer plate 22 of the front absorber 20 that is in a position where the load is transmitted is near the central portions 14a of the inner plate 14 of the absorber 10, so that the load can be prevented from being transmitted to the corner portions 14b of higher rigidity of the absorber 10, and accordingly, the crushing peak load can be prevented from being increased. Through the above effects, the railway vehicle provided can lower the crushing peak load and thus can relieve the impact shock caused to the crew and the passengers.

### [Second Embodiment]

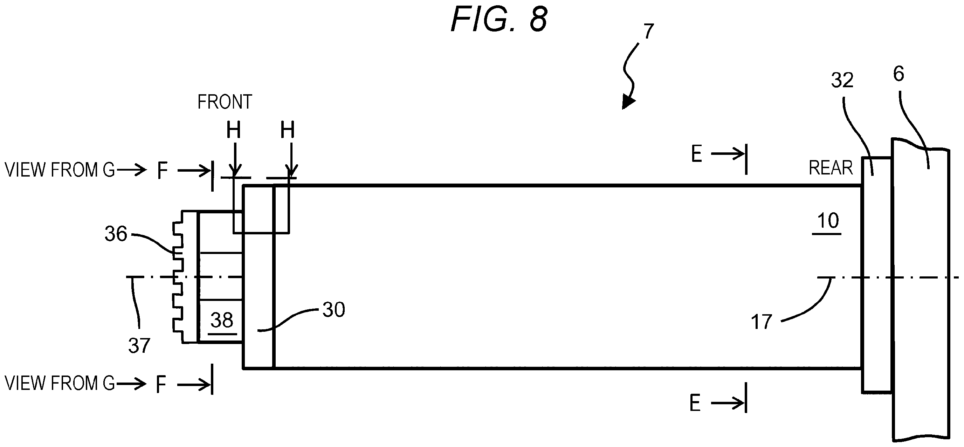

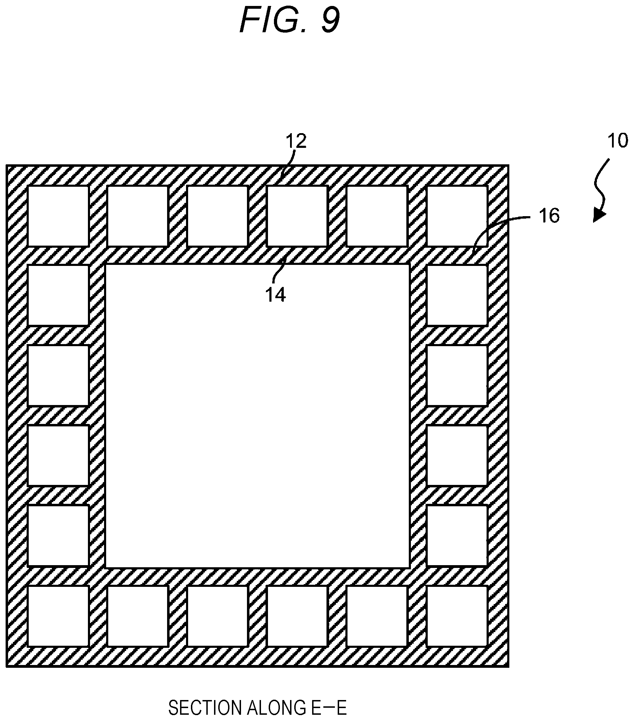

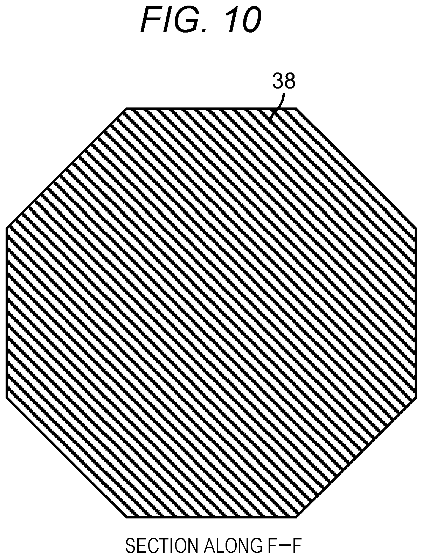

FIGS. 8 to 12 illustrate a shock absorbing device 7 according to the second embodiment. In the present embodiment, the shock absorbing device 7 is formed mainly of an absorber 10 in a rear position and a front plate 38 that serves as a front member in a front position. The absorber 10 and the front plate 38 are coupled together by being joined to a connecting plate 30 having an outer shape substantially corresponding to an outer shape of the absorber 10. Those including a structure and a shape of the connecting plate 30, an outer edge shape of the front plate 38, placement of the front plate 38 with respect to an inner plate 14 of the absorber 10, and a structure of an anti-climber 36 are similar to those in the first embodiment.

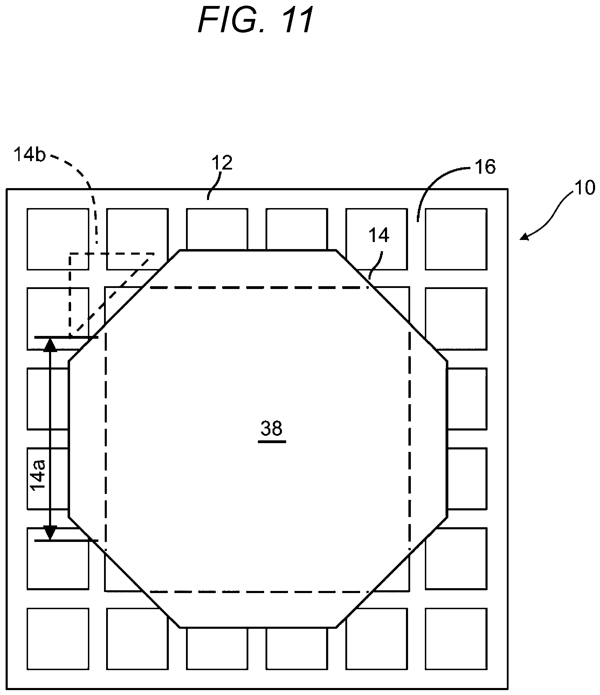

When the shock absorbing device 7 is viewed in its longitudinal direction (in a direction in which impact load acts), among eight borders of the front plate 38, four borders including those facing each other in a vertical direction and those facing each other in a horizontal direction are disposed parallel to respective four sides of the inner plate 14 of the absorber 10. In the second embodiment, the absorber 10 and the front plate 38 are in phase with each other in a circumferential direction of the shock absorbing device 7 (that is, around axes 37, 17) and are not rotated relative to each other. When viewed in the longitudinal direction (in the direction in which the impact load acts), the above four borders among the eight borders of the front plate 38 overlap respective central portions 14a (refer to FIG. 11) of the four sides of the inner plate 14 of the absorber 10. This is a result of the number of angles of the absorber 10 being half the number of angles of the front plate 38. A similar positional relationship is seen even, for example, in a combination of a hexagonal front plate 38 and a triangular absorber 10 or a combination of a decagonal front plate 38 and a pentagonal absorber 10.

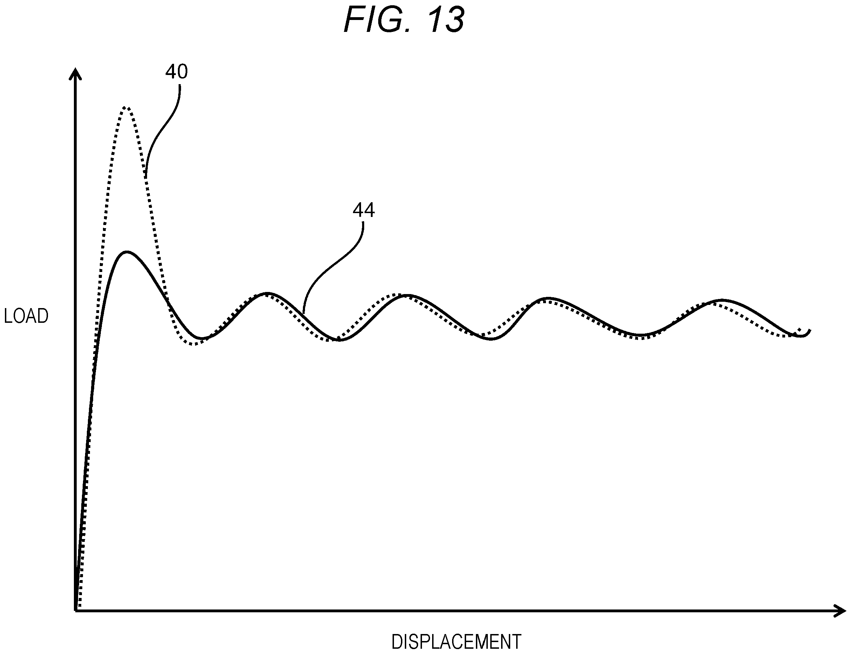

FIG. 13 is a graph showing a load-displacement curve of a structure using only the absorber 10 and a load-displacement curve of the present embodiment (the structure using the absorber 10 and the front plate 38 in combination) . In a shock absorbing device 7 using only the absorber 10, the load acts on a whole surface of the absorber 10 of large cross section in early crushing, so that a high crushing peak load is caused, thereby causing great impact shock to crew and passengers in a railroad vehicle.

On the other hand, in the shock absorbing device 7 of the present embodiment, the load from the front plate 38 acts mainly on the central portions 14a of less rigidity of the inner plate 14 of the absorber 10 in early crushing, so that crushing gradually starts from within the absorber 10. Thus, the load can be prevented from acting on the whole surface of the absorber 10 at a time. The outer borders of the front plate 38 that are in a position where the load is transmitted are near the respective central portions of the sides of the inner plate 14 of the absorber 10, so that the load can be prevented from being transmitted to corner portions of higher rigidity, and accordingly, a crushing peak load can be prevented from being increased. Through the above effects, the crushing peak load can be lowered, and thus impact shock that is caused to the crew and the passengers in the railroad vehicle can be relieved.

It is to be noted that the above description of the process in which the load from the front plate 38 is transmitted to the central portions 14a of the inner plate 14 of the absorber 10 is based on a premise that the front plate 38 is connected directly to the absorber 10.

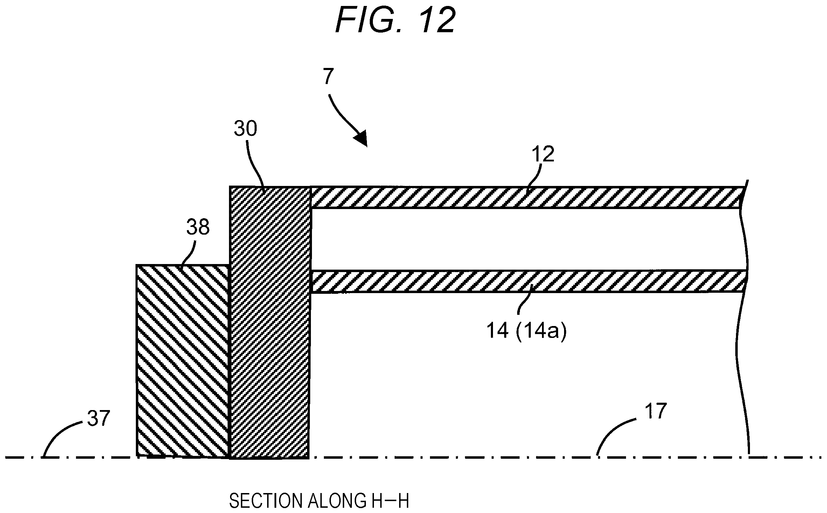

However, in cases where the front plate 38 is coupled to the absorber 10 via the connecting plate 30 having a predetermined thickness as shown in FIGS. 8 and 12, the load from the front plate 38 is transmitted to the absorber 10 through the connecting plate 30. The connecting plate 30 has the predetermined thickness to have such rigidity as to be capable of transmitting the load from the front plate 38 to the absorber 10. Since the connecting plate 30 has such a predetermined thickness, even in cases where the axis 37 of the front plate 38 is not aligned with (or not close to) the axis 17 of the absorber 10, the load from the front plate 38 is transmitted to the inner plate 14 (particularly to the central portions 14a) of the absorber 10 through the connecting plate 30, so that the shock absorbing device 7 absorbs a large amount of impact shock by being crushed without causing an excessive peak load.

Thus, strict assembly tolerance necessary for the placement such as shown in FIG. 11 in which the axis 37 of the front plate 38 is aligned with the axis 17 of the absorber 10 can be moderated, whereby manufacturing cost necessary for assembly can be reduced.

The description of FIG. 13 is premised on such an in-phase positional relationship that among the eight borders of the front plate 38, the four borders including those facing each other in the vertical direction and those facing each other in the horizontal direction are parallel to the respective four sides of the inner plate 14 of the absorber 10 (with the absorber 10 and the front plate 38 not rotated relative to each other as shown FIG. 11) when the shock absorbing device 7 is viewed in its longitudinal direction. However, even in cases where the front plate 38 is rotated on its axis 37 relative to the absorber 10 (or out of phase with the absorber 10), that is to say, among the eight borders of the front plate 38, the four borders including those facing each other in the vertical direction and those facing each other in the horizontal direction are not parallel to the respective four sides of the inner plate 14 of the absorber 10 when viewed axially of the shock absorbing device 7, functional effects similar to those of the in-phase positional relationship (such as absorption of a large amount of impact shock through crushing without an excessive peak load) result from overlaps between the outer borders of the front plate 38 and the central portions of the inner plate 14.

The technical scope of the present invention is determined by the claims and may also extend to the scope of replacement easily made by those skilled in the art.

In other words, the above embodiments are not restrictive of the present invention, so that various modifications are included in the present invention insofar as they fall within said scope. For example, the above embodiments are described in detail to explain the present invention in an easily understood manner, so that the present invention is not necessarily limited to include all the structures described. One of the embodiments can partly be replaced by the structure of the other embodiment, and the structure of one of the embodiments can be added to the structure of the other embodiment. Moreover, the structure of each of the embodiments can partly have another structure as an addition and can partly be deleted and replaced.

### Reference Signs List

- 1: lead vehicle structure
- 2: roof structure
- 3: side structure
- 4: underframe
- 5: end structure
- 6: lead structure
- 7: shock absorbing device
- 10: absorber
- 12: outer plate (outer tube)
- 14: inner plate (inner tube)
- 14a: central portion
- 14b: corner portion
- 16: rib
- 17: axis
- 20: front absorber
- 22: outer plate (outer tube)
- 24: inner plate (inner tube)
- 26: rib
- 27: axis
- 30: connecting plate
- 32, 34: closing plate
- 36: anti-climber

## Claims

1. A railway vehicle comprising a shock absorbing device (7) comprising an absorber (10) configured to absorb impact shock, wherein
the absorber (10) is a hollow structure comprising an inner tube (14) of polygonal cross section, an outer tube (12) of polygonal cross section, and a plurality of ribs (16) connecting the inner tube (14) and the outer tube (12), with the inner tube (14), the outer tube (12) and the ribs (16) extending in a direction in which impact load acts, and
a front member of polygonal cross section is mounted in front of the absorber (10) to be substantially coaxial with the absorber (10);
**characterized in that**:
when viewed end-on to the absorber (10) in the direction in which the impact load acts, the front member overlaps the inner tube (14) at central portions (14a) thereof but remains inside the inner tube (14) at corner portions (14b) thereof, the central portions (14a) excluding vertices of the polygonal cross section of the inner tube (14) and the corner portions (14b) including vertices of the polygonal cross section of the inner tube (14); and
crushing of the absorber (10) starts from the central portions (14a) of the inner tube (14) of the absorber (10) when impact force is applied to the front member.

2. The railway vehicle according to claim 1, wherein the front member extends in the direction in which the impact load acts and is a hollow structure comprising an inner tube (24) of polygonal cross section, an outer tube (22) of polygonal cross section, and a plurality of ribs (26) connecting the inner tube (22) and the outer tube (24), with the inner tube (24), the outer tube (22) and the ribs (26) extending in the direction in which the impact load acts.

3. The railway vehicle according to claim 2, wherein the front member is mounted via a connecting plate (30) fixed firmly to an end face of the outer tube (12) of the absorber (10) .

4. The railway vehicle according to claim 2 or 3, wherein the outer tube (24) of the front member is of 2n-gonal cross section when the inner tube (14) of the absorber (10) is of n-gonal cross section, where n is a natural number not less than 3.

5. The railway vehicle according to claim 1, wherein the front member is formed of a plate (38) of polygonal cross section.

6. The railway vehicle according to claim 5, wherein the plate (38) is mounted via a connecting plate (30) fixed firmly to an end face of the outer tube (12) of the absorber (10).

7. The railway vehicle according to claim 5 or 6, wherein the plate (38) is of 2n-gonal cross section when the inner tube (14) of the absorber (10) is of n-gonal cross section, where n is a natural number not less than 3.

## Patentansprüche

1. Schienenfahrzeug, das eine stoßabsorbierende Vorrichtung (7) umfasst, die ein Absorptionselement (10) umfasst, das ausgebildet ist, um Aufprallstöße zu absorbieren, wobei
der Absorptionselement (10) eine hohle Struktur ist, die ein inneres Rohr (14) mit polygonalem Querschnitt, ein äußeres Rohr (12) mit polygonalem Querschnitt und eine Vielzahl von Rippen (16) umfasst, die das innere Rohr (14) und das äußere Rohr (12) miteinander verbinden, wobei sich das innere Rohr (14), das äußere Rohr (12) und die Rippen (16) in einer Richtung erstrecken, in die die Aufpralllast wirkt, und
ein Frontelement mit polygonalem Querschnitt vor dem Absorptionselement (10) angebracht ist, um im Wesentlichen koaxial in Bezug auf das Absorptionselement (10) vorzuliegen;
**dadurch gekennzeichnet, dass**:
bei Betrachtung vom Ende, an dem das Absorptionselement (10) vorliegt, in Richtung, in der die Aufpralllast wirkt, überlappt das Frontelement mit dem inneren Rohr (14) in zentralen Abschnitten (14a) von diesem, verbleibt, aber im Inneren des inneren Rohrs (14) an Eckabschnitten davon, wobei die zentralen Abschnitte (14a) die Eckpunkte des polygonalen Querschnitts des inneren Rohrs (14) und die Eckabschnitte (14b) einschließlich der Eckpunkte des polygonalen Querschnitts des inneren Rohrs (14) ausspart; und
das Zusammenstauchen des Absorptionselements (10) von den zentralen Abschnitten (14a) des inneren Rohrs (14) des Absorptionselements (10) aus beginnt, wenn Aufprallkraft auf das Frontelement ausgeübt wird.

2. Schienenfahrzeug nach Anspruch 1, wobei das Frontelement sich in die Richtung erstreckt, in der die Aufpralllast wirkt und eine hohle Struktur ist, die ein inneres Rohr (24) mit polygonalem Querschnitt, ein äußeres Rohr (22) mit polygonalem Querschnitt und eine Vielzahl von Rippen (26) umfasst, die das innere Rohr (22) und das äußere Rohr (24) miteinander verbinden, wobei das innere Rohr (24), das äußere Rohr (22) und die Rippen (26) sich in die Richtung erstrecken, in die die Aufpralllast wirkt.

3. Schienenfahrzeug nach Anspruch 2, wobei das Frontelement über eine Verbindungsplatte (30) montiert ist, die fest am einer Endfläche des äußeren Rohrs (12) des Absorptionselements (10) angebracht ist.

4. Schienenfahrzeug nach Anspruch 2 oder 3, wobei das äußere Rohr (24) des Frontelements einen 2n-gonalen Querschnitt aufweist, wenn das innere Rohr (14) des Absorptionselements (10) einen n-gonalen Querschnitt aufweist, wobei n eine natürliche Zahl von nicht weniger als 3 ist.

5. Schienenfahrzeug nach Anspruch 1, wobei das Frontelement aus einer Platte (38) mit polygonalem Querschnitt besteht.

6. Schienenfahrzeug nach Anspruch 5, wobei die Platte (38) über eine Verbindungsplatte (30) montiert ist, die fest an einer Endfläche des äußeren Rohrs (12) des Absorptionselements (10) befestigt ist.

7. Schienenfahrzeug nach Anspruch 5 oder 6, wobei die Platte (38) einen 2n-gonalen Querschnitt aufweist, wenn das innere Rohr (14) des Absorptionselements (10) einen n-gonalen Querschnitt aufweist, wobei n eine natürliche Zahl von nicht weniger als 3 ist.

## Revendications

1. Véhicule ferroviaire comprenant un dispositif d'amortissement de chocs (7) comprenant un amortisseur (10) configuré pour amortir des chocs d'impact, dans lequel
l'amortisseur (10) est une structure creuse comprenant un tube interne (14) de section transversale polygonale, un tube externe (12) de section transversale polygonale, et une pluralité de nervures (16) raccordant le tube interne (14) au tube externe (12), avec le tube interne (14), le tube externe (12) et les nervures (16) s'étendant dans une direction dans laquelle une charge d'impact agit, et
un élément avant de section transversale polygonale est monté devant l'amortisseur (10) pour être sensiblement coaxial avec l'amortisseur (10) ;
**caractérisé en ce que** :
vu bout-à-bout avec l'amortisseur (10) dans la direction dans laquelle la charge d'impact agit, l'élément avant chevauche le tube interne (14) au niveau de parties centrales (14a) de celui-ci mais reste à l'intérieur du tube interne (14) au niveau de parties de coin (14b) de celui-ci, les parties centrales (14a) excluant des sommets de la section transversale polygonale du tube interne (14) et les parties de coin (14b) comprenant des sommets de la section transversale polygonale du tube interne (14) ; et
l'écrasement de l'amortisseur (10) démarre à partir des parties centrales (14a) du tube interne (14) de l'amortisseur (10) lorsqu'une force d'impact est appliquée sur l'élément avant.

2. Véhicule ferroviaire selon la revendication 1, dans lequel l'élément avant s'étend dans la direction dans laquelle la charge d'impact agit et est une structure creuse comprenant un tube interne (24) de section transversale polygonale, un tube externe (22) de section transversale polygonale, et une pluralité de nervures (26) raccordant le tube interne (22) au tube externe (24), avec le tube interne (24), le tube externe (22) et les nervures (26) s'étendant dans la direction dans laquelle la charge d'impact agit.

3. Véhicule ferroviaire selon la revendication 2, dans lequel l'élément avant est monté via une plaque de raccordement (30) fermement fixée sur une face d'extrémité du tube externe (12) de l'amortisseur (10).

4. Véhicule ferroviaire selon la revendication 2 ou 3, dans lequel le tube externe (24) de l'élément avant présente une section transversale 2n-gonale lorsque le tube interne (14) de l'amortisseur (10) présente une section transversale n-gonale, où n est un entier naturel non inférieur à 3.

5. Véhicule ferroviaire selon la revendication 1, dans lequel l'élément avant est formé d'une plaque (38) de section transversale polygonale.

6. Véhicule ferroviaire selon la revendication 5, dans lequel la plaque (38) est montée via une plaque de raccordement (30) fermement fixée à une face d'extrémité du tube externe (12) de l'amortisseur (10).

7. Véhicule ferroviaire selon la revendication 5 ou 6, dans lequel la plaque (38) présente une section transversale 2n-gonale lorsque le tube interne (14) de l'amortisseur (10) présente une section transversale n-gonale, où n est un entier naturel non inférieur à 3.
